**Europäisches Patentamt**

**European Patent Office**

**Office européen des brevets**

(11) Veröffentlichungsnummer: **0 102 443**
**B1**

(12) # EUROPÄISCHE PATENTSCHRIFT

(45) Veröffentlichungstag der Patentschrift:
**27.08.86**

(51) Int. Cl.⁴: **F 16 K 11/06**

(21) Anmeldenummer: **83101941.9**

(22) Anmeldetag: **28.02.83**

(54) **Mehrwege-Schieberventil.**

(30) Priorität: **09.08.82 DE 3229606**

(43) Veröffentlichungstag der Anmeldung:
**14.03.84 Patentblatt 84/11**

(45) Bekanntmachung des Hinweises auf die Patenterteilung:
**27.08.86 Patentblatt 86/35**

(84) Benannte Vertragsstaaten:
**AT CH DE FR GB IT LI**

(56) Entgegenhaltungen:
**DE - A - 2 113 904**
**DE - A - 2 118 710**
**FR - A - 1 241 586**
**FR - A - 1 488 669**
**US - A - 1 375 205**
**US - A - 3 872 889**

(73) Patentinhaber: **WABCO Westinghouse
Steuerungstechnik GmbH & Co.,
Bartweg 13 Postfach 91 12 70, D-3000 Hannover 91 (DE)**

(72) Erfinder: **Göttling, Helmut, Fuhrenkamp 3,
D-3004 Isernhagen 4 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

ACTORUM AG

## Beschreibung

Die Erfindung betrifft ein Mehrwege-Schieberventil gemäss dem Oberbegriff des Patentanspruches 1.

Aus der FR-A-1 488 669 ist ein Schieberventil bekannt, welches aus einer mit einer Bohrung für einen Druckmittelanschluss versehenen, als Grundplatte dienenden ersten Platte und einem Ventilschieber besteht, welcher über die Grundplatte führbar ist und eine Ausnehmung aufweist, über welche zwei weitere Bohrungen mit der ersten Bohrung verbindbar sind, wobei die Ausnehmung mit einem Dichtelement zusammenwirkend mit der Grundplatte eine abgedichtete als Überströmkanal dienende Kammer bildet. In der Ausnehmung des Ventilschiebers sind zwei rohrförmig ausgebildete abgestufte Träger für Dichtelemente angeordnet. Jeder der Träger weist auf seinem Umfang eine umlaufende Nut auf, in welcher je ein Dichtring gelagert ist. Die auf dem Umfang der rohrförmigen Träger angeordneten Dichtringe sollen verhindern, dass das die rohrförmigen Träger durchströmende Druckmittel durch einen möglichen Spalt zwischen der den Durchlass im Ventilschieber begrenzenden Wandung und Mantelfläche der rohrförmigen Träger in das Ventilgehäuse gelangt. An den einander abgewandten Stirnseiten der rohrförmigen Träger sind Dichtringe angeordnet, derart, dass der Dichtring des einen Trägers dichtend an der Grundplatte und der Dichtring des anderen Trägers dichtend an der der Grundplatte gegenüberliegenden, auf der anderen Seite des Ventilschiebers angeordneten Dichtplatte dichtend anliegt. Zwischen den beiden rohrförmigen Trägern ist in der Ausnehmung des Durchlasses im Ventilschieber eine Feder angeordnet, welche die beiden rohrförmigen Träger in der Weise beaufschlagt, dass der eine Träger mit dem zugeordneten Dichtring gegen die Grundplatte und der andere Träger mit seinem zugeordneten Dichtring gegen die Dichtplatte gedrückt wird.

Dieses bekannte Schieberventil hat verschiedene Nachteile. Der Aufbau des Schieberventils ist aufwendig, da für die Dichtelemente besonders ausgebildete Träger vorgesehen werden müssen, die eine zusätzliche Abdichtung zwischen der den Durchlass begrenzenden Wandung und der Mantelfläche der Träger erfordern. Um die Dichtelemente an der Grundplatte und an der Dichtplatte dichtend zur Anlage bringen zu können, ist eine relativ starke Feder erforderlich, welche die Träger in Richtung auf die Grundplatte bzw. auf die Dichtplatte zu beaufschlagt. Die Feder muss so ausgelegt sein, dass sie eine hohe Druckkraft auf die Dichtringe ausübt, um eine sichere Dichtung des Durchlasses für das Druckmittel zu gewährleisten. Dies hat den Nachteil, dass die Betätigungskräfte des Schieberventils auch dann sehr gross sind, wenn das Schieberventil in Einrichtungen oder Anlagen eingesetzt wird, die mit niedrigen Drücken arbeiten.

Der Erfindung liegt deshalb die Aufgabe zugrunde, ein Mehrwege-Schieberventil der eingangs genannten Art zu schaffen, welches leicht schaltbar ist und ein hohes Mass an Druckdichtigkeit bietet.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, die Anpresskraft der Dichtung druckabhängig zu verändern und die Betätigungskräfte sehr klein halten zu können. Die bei dem erfindungsgemässen Mehrwege-Schieberventil erzielten geringen Betätigungskräfte bei gleichzeitig sehr guter Dichtwirkung werden dadurch erreicht, dass der Druck des zu schaltenden Mediums kaum den Ventilschieber, sondern mehr die Dichtplatte über dem Durchlass beaufschlagt.

Anhand der Abbildungen werden zwei Ausführungsformen des erfindungsgemässen Mehrwege-Schieberventils nachstehend näher erläutert.

Es zeigen:

Fig. 1 eine Seitenansicht eines als Flachschieberventil ausgebildeten 4/2-Wege-Schieberventils, bei welchem der Überströmkanal als eine den Ventilschieber durchdringende Ausnehmung ausgebildet ist, im Schnitt,

Fig. 2 eine Draufsicht auf ein entsprechend dem Flachschieberventil gemäss Fig. 1 ausgebildetes Flachschieberventil bei abgenommener Dichtplatte und

Fig. 3 eine Seitenansicht eines Flachschieberventils, bei welchem die miteinander zu verbindenden Druckmittelanschlüsse senkrecht zueinander angeordnet sind, im Schnitt.

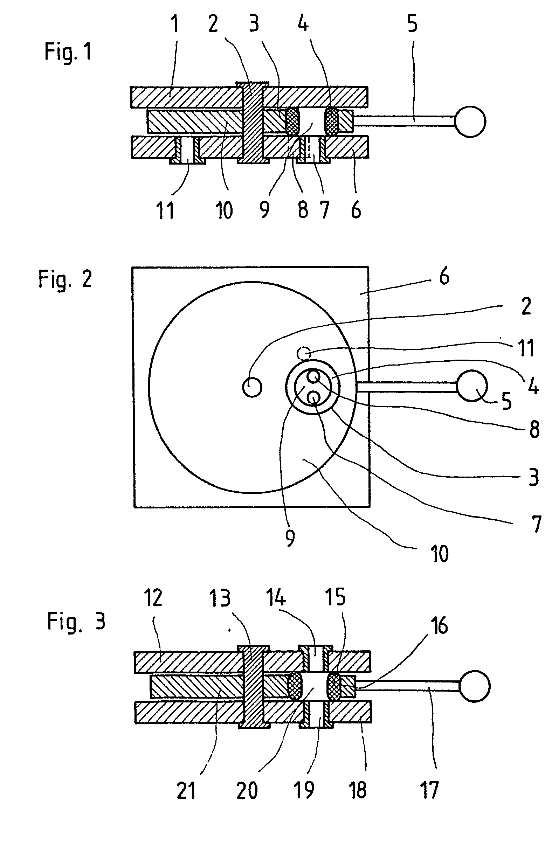

In Fig. 1 ist im Schnitt ein als 4/2-Wegeventil ausgebildetes Flachschieberventil dargestellt, welches sich aus einer als Grundplatte 6 dienenden ersten Platte, einem auf der Grundplatte 6 drehbar gelagerten Ventilschieber 10 und einer als Dichtplatte 1 ausgebildeten zweiten Platte zusammensetzt. Der Ventilschieber 10 ist auf einer an der Grundplatte 6 befestigten und die Dichtplatte 1 durchdringenden Achse 2 gelagert. In der Grundplatte 6 sind 3 als Druckmittelanschlüsse ausgebildete Bohrungen 8 , 7, 11 vorgesehen, wobei die erste Bohrung 8 als Druckmitteleingang, die zweite Bohrung 7 als Druckmittelausgang und die dritte Bohrung 11 ebenfalls als Druckmittelausgang dienen. Jeder der beiden Druckmittelausgänge ist mit einem Verbraucher verbunden. Der Ventilschieber 10 weist eine als Durchlass 3 ausgebildete Ausnehmung auf, die einerseits von der Grundplatte 6 und andererseits von der Dichtplatte 1 abgeschlossen wird. Im Durchlass 3 ist ein als O-Ring ausgebildetes Dichtelement 4 gelagert. Der vom Dichtelement 4 umschlossene Raum bildet zusammen mit der Grundplatte 6 und der Dichtplatte 1 eine als Überströmkanal dienende Kammer 9 zur Verbindung von jeweils zwei Druckmittelanschlüssen. Der Querschnitt des O-Ringes ist so bemessen, dass die O-Ring-Flanken an der Grundplatte 6 und an der Dichtplatte 1 unter leichtem Druck anliegen. Ein Schalthebel 5, der am Ventilschieber 10 befestigt ist, dient zur Betätigung des Flachschieberventils.

In Fig. 2 ist die Draufsicht auf ein dem in Fig. 1 beschriebenen Flachschieberventil entsprechendes Flachschieberventil bei abgenommener Dichtplatte dargestellt. Der besseren Übersicht halber sind den in Fig. 1 gezeigten Bauteilen gleiche Bauteile mit gleichen Bezugszeichen versehen.

Auf einer Grundplatte 6 ist zentrisch eine Achse 2 befestigt, die als Lager für einen Ventilschieber 10 dient. Der Ventilschieber 10 weist einen Durchlass 3 auf, in welchem ein als O-Ring aus-gebildetes Dichtelement 4 eingesetzt ist. Der vom Dichtelement 4 umschlossene Raum bildet zusammen mit der Grundplatte 6 und einer hier nicht gezeigten Dichtplatte eine als Überströmkanal dienende Kammer 9 zur Verbindung von jeweils zwei Druckmittelanschlüssen. In der Grundplatte 6 sind drei als Druckmittelanschlüsse ausgebildete Bohrungen 8, 7, 11 vorgesehen, wobei die erste Bohrung 8 als Druckmitteleingang, die zweite Bohrung 7 als Druckmittelausgang und die dritte Bohrung 11 ebenfalls als Druckmittelausgang dient.

Ein am Ventilschieber 10 befestigter Schalthebel 5 dient zur Betätigung des Schieberventils.

Soll in einen mit dem Druckmittelausgang 7 verbundenen ersten Verbraucher Druckmittel eingesteuert werden, so wird durch Drehen des Ventilschiebers 10 um die Achse 2 die Ausnehmung 3 des Ventilschiebers 10 in eine Position gebracht, in welcher die als Druckmitteleingang dienende Bohrung 8 und die als erster Druckmittelausgang dienende Bohrung 7 vom Dichtelement 4 umschlossen werden. Durch den Druckmitteleingang 8, die vom Dichtelement 4, der Grundplatte 6 sowie die Dichtplatte 1 gebildetete, als Überströmkanal dienende Kammer 9 und den Druckmittelausgang 7 strömt das Druckmittel vom Druckmittelvorratsbehälter zum ersten Verbraucher. Der sich in der als Überströmkanal dienenden Kammer 9 aufbauende Druck presst das Dichtelement 4 gegen die Wandung der Ausnehmung 3. Durch die Druckbelastung dehnt sich das Dichtelement 4 in Richtung auf die Grundplatte 6 und die Dichtplatte 1 zu aus, wodurch die Flächenpressung zwischen den Flanken des Dichtelementes 4 und der Grundplatte 6 bzw. der Dichtplatte 1 erhöht und somit eine sehr gute Dichtwirkung erzielt wird.

Gleichzeitig ist der zweite Druckmittelausgang 11 mit der Atmosphäre verbunden.

Fig. 3 zeigt im Schnitt eine Seitenansicht eines Flachschieberventils, bei welchem die miteinander zu verbindenden Druckmittelanschlüsse senkrecht zueinander angeordnet sind.

Das Flachschieberventil setzt sich im wesentlichen aus einer als Gehäuseboden dienenden Grundplatte 18, einem auf der Grundplatte 18 drehbar gelagerten Ventilschieber 21 und einer als Deckel ausgebildeten Dichtplatte 12 zusammen. Der Ventilschieber 21 ist auf einer an der Grundplatte 18 befestigten und die Dichtplatte 12 durchdringenden Achse 13 gelagert. In der Grundplatte 18 ist eine als Druckmitteleingang dienende erste Bohrung 19 vorgesehen. Der Ventilschieber 21 weist eine Ausnehmung 16 auf, die einerseits von der Grundplatte 18 und andererseits von der als Deckel dienenden Dichtplatte 12 abgeschlossen wird. In der Ausnehmung 16 ist ein als O-Ring ausgebildetes Dichtelement 15 gelagert. Der vom Dichtelement 15 umschlossene Raum bildet zusammen mit der Grundplatte 18 und der Dichtplatte 12 eine als Überströmkanal dienende Kammer 20. In der Dichtplatte 12 sind eine als Druckmittelausgang dienende Bohrung 14 und eine hier nicht gezeigte als Entlüftungsanschluss dienende weitere Bohrung vorgesehen, wobei die als Druckmittelausgang dienende Bohrung 14 über die als Überströmkanal ausgebildete Kammer 20 des Ventilschiebers 21 mit der als Druckmitteleingang dienenden Bohrung 19 bzw. mit der als Entlüftungsanschluss ausgebildeten Bohrung verbindbar sind.

Der Querschnitt des in der Ausnehmung 16 des Ventilschiebers 21 angeordneten O-Ringes ist so bemessen, dass die O-Ring-Flanken an der Grundplatte 18 und an der Dichtplatte 12 unter leichter Vorspannung anliegen. Ein Schalthebel 17, der am Ventilschieber 21 befestigt ist, dient zur Betätigung des Flachschieberventils. Die Anordnung von Druckmittelanschlüssen an den sich gegenüberliegenden Dichtflächen des Ventils ermöglicht eine grosse Anzahl von Einbau- und Anschlussvariationen.

**Patentansprüche**

1. Mehrwege-Schieberventil mit folgenden Merkmalen:

a) Es ist eine mit wenigstens einer Bohrung für einen Druckmittelanschluss versehene als Grundplatte dienende erste Platte (6) vorgesehen;

b) es ist ein Ventilschieber (10) vorgesehen, welcher über die Grundplatte führbar ist und wenigstens eine Ausnehmung aufweist, über welche wenigstens eine zweite Bohrung mit der ersten Bohrung verbindbar ist;

c) es ist eine als Dichtplatte dienende zweite Platte (1) vorgesehen, welche auf der der als Grundplatte dienenden ersten Platte (6) abgewandten Seite des Ventilschiebers (10) angeordnet ist;

d) am Ventilschieber (10) ist ein Dichtelement angeordnet, derart, dass die Ausnehmung mit der Grundplatte eine abgedichtete, als Überströmkanal dienende Kammer bildet;

dadurch gekennzeichnet, dass das aus verformbarem Werkstoff bestehende Dichtelement (4) in der als Durchlass ausgebildeten Ausnehmung (3) des Ventilschiebers (10) angeordnet ist, derart, dass es sich durch die Ausnehmung (3) hindurcherstreckt und mit seiner einen Flanke an der ersten Platte (6) und mit seiner anderen Flanke an der zweiten Platte (1) dichtend anliegt.

2. Mehrwege-Schieberventil nach Anspruch 1, dadurch gekennzeichnet, dass wenigstens eine der als Druckmittelanschlüsse dienenden Bohrungen (14) in der als Dichtplatte (12) dienenden zweiten Platte angeordnet ist.

**Revendications**

1. Robinet-vanne à tiroir à plusieurs voies présentant les caractéristiques suivantes:

a) il est prévu une première plaque (6) servant de plaque de base et munie d'au moins un alésage pour un raccord pour fluide sous pression;

b) il est prévu un tiroir de vanne (10) qui peut être guidé sur la plaque de base et présente au moins un évidement par l'intermédiaire duquel au moins un second alésage peut être relié au premier alésage;

c) il est prévu une seconde plaque (1) qui sert de plaque d'étanchéité et qui est disposée sur la face du tiroir de vanne opposée à la première plaque (6) servant de plaque de base;

d) un élément d'étanchéité est disposé sur le tiroir de vanne (10) de façon telle que l'évidement forme, avec la plaque de base, une chambre étanche, servant de canal de passage;

caractérisé en ce que l'élément d'étanchéité (4), constitué d'une matériau déformable, est disposé dans l'évidement (3), conçu comme passage, du tiroir de vanne (6) de façon telle qu'il s'étend d'une extrémité à l'autre de l'évidement (3) et s'applique de façon étanche, par l'un de ses bords, contre la première plaque (6) et, par l'autre de ses bords, contre la seconde plaque (1).

2. Robinet-vanne à tiroir à plusieurs voies selon la revendication 1, caractérisé en ce qu'au moins l'un des alésages (14) servant de raccords pour le fluide sous pression est disposé dans la seconde plaque servant de plaque d'étanchéité (12).

**Claims**

1. Multiple-way gate valve having the following features:

a) there is provided a first plate (6) that has at least one bore for a pressure-medium connection and serves as the base plate;

b) there is provided a sliding valve member (10) that can be guided over the base plate and has at least one aperture via which at least a second bore can be connected to the first bore;

c) there is provided a second plate (1) that serves as the sealing plate and is arranged on the side of the sliding valve member (10) that is remote from the first plate (6) serving as the base plate;

d) a sealing member is arranged on the sliding valve member (10) in such a manner that the aperture forms with the base plate a sealed chamber that serves as a transfer passage;

characterised in that the sealing member (4) of deformable material is arranged in the aperture (3) of the sliding valve member (10), which aperture is in the form of a passage, in such a manner that it extends through the aperture (3) and one side abuts against the first plate (6) to form a seal and the other side abuts against the second plate (1) to form a seal.

2. Multiple-way gate valve according to claim 1, characterised in that at least one of the bores (14) serving as pressure-medium connections is arranged in the second plate which serves as the sealing plate (12).

Fig. 1

Fig. 2

Fig. 3